# FASCICULE DE BREVET EUROPEEN

(11) **EP 3 301 608 B1**
(45) Date de publication et mention de la délivrance du brevet: **29.07.2020**
(21) Numéro de dépôt: 17156584.9
(22) Date de dépôt: 17.02.2017
(51) Int. Cl.: G06K 7/10

(54) **PROCÉDÉ DE DÉTECTION DE LA PRÉSENCE ÉVENTUELLE D'UN OBJET PAR UN LECTEUR SANS CONTACT, ET LECTEUR CORRESPONDANT**
METHODE ZUR ANWESENHEITSDETEKTION VON OBJEKTEN FÜR EINEN KABELLOSEN LESER UND ENTSPRECHENDER LESER
METHOD FOR DETECTING THE EVENTUAL PRESENCE OF AN OBJECT BY A CONTACTLESS READER, AND CORRESPONDING READER

(30) Priorité: 29.09.2016 FR 1659285
(43) Date de publication de la demande: 04.04.2018
(73) Titulaire: STMicroelectronics (Rousset) SAS, 13790 Rousset (FR)
(72) Inventeur: TRAMONI, Alexandre, 83330 Le Beausset (FR)
(74) Mandataire: Casalonga

(56) Documents cités:
- EP-A1- 2 602 942
- EP-A1- 2 635 052
- EP-A2- 1 840 790

## Description

Des modes de mise en œuvre et de réalisation de l'invention concernent la communication sans contact entre un lecteur et un objet, en particulier un objet NFC (« Near Field Communication »), par exemple un transpondeur du type étiquette (« tag » en langue anglaise), une carte à puce sans contact ou encore un téléphone mobile émulé en mode carte sans que ces exemples ne soient limitatifs, et plus particulièrement la détection de la présence éventuelle d'un tel objet par le lecteur.

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un objet sans contact est un objet capable d'échanger des informations via une antenne avec un autre objet sans contact, par exemple un lecteur, selon un protocole de communication sans contact.

Un objet NFC, qui est un objet sans contact, est un objet compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Lors d'une transmission d'information entre un lecteur et un objet émulé en mode étiquette ou carte, le lecteur génère un champ magnétique par l'intermédiaire de son antenne qui est généralement dans les normes classiquement utilisées, une onde sinusoïdale (la porteuse) à 13,56MHz.

Pour transmettre des informations depuis le lecteur vers l'objet, le lecteur utilise une modulation d'amplitude de ladite porteuse.

L'objet quant à lui démodule la porteuse reçue pour en déduire les données transmises depuis le lecteur.

Pour une transmission d'informations de l'objet vers le lecteur, le lecteur génère le champ magnétique (la porteuse) sans modulation. L'antenne de l'objet émulant l'étiquette module alors le champ généré par le lecteur, en fonction des informations à transmettre. La fréquence de cette modulation correspond à une sous-porteuse de ladite porteuse. La fréquence de cette sous porteuse dépend du protocole de communication utilisé et peut être par exemple égale à 848 kHz.

Cette modulation est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet. Et, de cette façon, les informations à transmettre depuis l'objet vers le lecteur sont transmises par modulation de charge au courant d'antenne du lecteur.

La variation de charge effectuée lors de la modulation de charge se traduit par une modulation d'amplitude et/ou de phase du signal (tension ou courant) au niveau de l'antenne du lecteur. Une copie du courant d'antenne est générée et injectée dans la chaîne de réception du lecteur où il est démodulé et traité de façon à extraire les informations transmises.

Le meilleur transfert de puissance entre le lecteur et l'étiquette est obtenu lorsque l'étiquette est équipée d'un circuit apparié avec le circuit résonant du lecteur, et résonant lui-même à la fréquence du signal transmis par le lecteur, par exemple 13,56 MHz.

Avant que le lecteur et l'objet communiquent selon un protocole de communication sans contact, il est prévu une phase de détection par le lecteur de la présence éventuelle de l'objet à proximité de ce dernier.

Un tel mode est par exemple décrit dans les normes de communication sans contact et prévoit une émission par le lecteur plus ou moins souvent, par exemple toutes les secondes, de requêtes et des attentes de réponses spécifiques en provenance de l'objet.

Si ces réponses spécifiques sont reçues, alors l'objet est détecté et la communication peut commencer.

Or, un tel mode de détection consomme beaucoup de puissance, ce qui est préjudiciable pour un lecteur fonctionnant sur batterie.

Il existe actuellement un mode de détection d'objets basse consommation qui consiste, dans une phase de calibration, à émettre des impulsions de champ magnétique à une fréquence de 13,56 MHz et de mesurer l'amplitude du champ électromagnétique au niveau de l'antenne. En effet, si une carte s'approche de l'antenne du lecteur, il en résulte une chute de tension au niveau de l'antenne du lecteur due à un effet de couplage.

La phase de calibration fournit donc une valeur de référence pour l'amplitude du champ magnétique mesurée au niveau de l'antenne.

Puis, hors calibration, si à un moment donné l'amplitude mesurée du champ électromagnétique au niveau de l'antenne du lecteur s'éloigne de cette valeur de référence, alors cela signifie qu'il y a eu un phénomène radiofréquence (effet de couplage) qui peut être dû à la présence éventuelle d'un objet sans contact ou bien à la présence par exemple d'une masse de fer dans l'environnement du lecteur.

On procède alors à une vérification de la présence effective de l'objet en utilisant la procédure normalisée c'est-à-dire l'envoi de requêtes et l'attente de réception de signaux d'acquittement.

Si cette phase de vérification aboutit à la conclusion que l'effet de couplage obtenu pendant la phase de détection ne correspondait pas à une détection effective d'un objet, on refait alors une phase de calibration pour obtenir une nouvelle valeur de référence.

Une telle détection présente des inconvénients.

En effet, le lecteur est équipé d'une chaîne de réception comportant un démodulateur qui est réglé sur la fréquence de la sous-porteuse utilisée par l'objet pour transmettre des informations vers le lecteur.

Ainsi, cette sous-porteuse est par exemple égale à 848 KHz dans les protocoles type A et type B définis dans la norme ISO-14443.

Et, si la mesure de l'amplitude du champ électromagnétique au niveau de l'antenne est effectuée par des moyens spécifiques sans utiliser la chaîne de réception, alors la sensibilité de la détection est bien inférieure à la sensibilité de la chaîne de réception lors de la réception des données de l'objet vers le lecteur.

En d'autres termes, alors que l'objet pourrait parfaitement communiquer avec le lecteur à une certaine distance, la détection de la présence de l'objet ne serait effective qu'à une distance moindre.

Si par contre la mesure de l'amplitude du champ électromagnétique est effectuée en utilisant la chaîne de réception, le signal de détection sera alors extrêmement faible en raison du filtrage de la fréquence porteuse de 13,56 MHz par la chaîne de réception.

Il en résultera donc des difficultés de détection de l'objet.

La demande de brevet EP 2602942A1 décrit un dispositif NFC capable de détecter la présence d'un autre dispositif NFC dans son champ magnétique.

Cette détection est basée sur une observation de métriques d'un signal de détection à différents intervalles et sur une relation statistique entre ces métriques.

Selon un mode de mise en œuvre et de réalisation, il est proposé une détection d'un objet sans contact par un lecteur sans contact, qui offre une consommation faible, tout en offrant une sensibilité de détection au moins aussi bonne que la sensibilité de communication des données.

Selon un aspect il est proposé un procédé de détection de la présence éventuelle d'un objet par un lecteur capable de communiquer mutuellement par au moins un protocole de communication sans contact.

Ce procédé comprend une phase de détection comportant une transmission par une antenne du lecteur d'un champ magnétique sur un signal porteur, par exemple une onde sinusoïdale à 13,56 MHz, ayant une sous-porteuse, par exemple une sous-porteuse à 848 KHz dans le cas d'un protocole type A ou B de la norme 14443, modulée par une première séquence de données, cette modulation étant choisie pour être au moins non interprétable par ledit objet.

Le procédé comporte par ailleurs une réception au niveau de l'antenne du lecteur d'un signal résultant de cette transmission et une démodulation dans le lecteur de la sous-porteuse dudit signal résultant de façon à en extraire une deuxième séquence de données.

Le procédé comprend alors une corrélation entre les deux séquences de données et une détection de la présence éventuelle ou de l'absence dudit objet en fonction du résultat de la corrélation.

Ainsi, les impulsions du champ électromagnétique, par exemple à 13,56 MHz, sont générées mais ce champ est modulé sur une sous-porteuse, avec un index de modulation choisi de façon à être au moins non interprétable par ledit objet, et le lecteur démodule sa propre sous-porteuse modulée, en utilisant avantageusement la chaîne de réception et peut ainsi corréler le signal transmis avec le signal résultant de cette transmission.

Le résultat de cette corrélation permet soit de détecter la présence éventuelle d'un objet, qui sera bien entendu à confirmer par une phase de vérification, ou bien l'absence d'un objet.

Bien qu'en théorie on puisse choisir n'importe quelle fréquence pour la sous-porteuse modulée dans la phase de détection, il est préférable de choisir la fréquence de la sous-porteuse modulée dans un groupe formé par une ou plusieurs fréquences de référence associées à un ou plusieurs protocoles de communication sans contact de référence susceptibles d'être utilisés par l'objet pour une transmission d'informations vers le lecteur.

Ainsi, on pourra choisir avantageusement une fréquence de 848 KHz qui est utilisée dans les protocoles type A ou B de la norme 14443 ou bien une fréquence de 212 KHz ou 424 KHz qui est utilisée dans le protocole type F de cette norme 14443 ou alors une fréquence de 26 KHz qui est utilisée dans la norme 15693.

Bien entendu, dans cette phase de détection, la modulation de la sous-porteuse émise par le lecteur ne doit pas pouvoir être interprétée par l'objet sans contact comme étant une transmission effective d'informations. Ainsi par exemple, lors d'une communication effective d'informations entre le lecteur et la carte, il est prévu que l'indice de modulation soit supérieur à 7% par exemple pour le cas des protocoles type B ou F de la norme 14443.

En conséquence, un indice de modulation inférieur à 7% utilisé pour moduler la sous-porteuse dans la phase de détection, pourra peut-être être détecté par l'objet sans contact mais ne sera pas interprété comme une transmission effective d'informations en provenance du lecteur.

Cela étant, il est préférable que la modulation de la sous-porteuse soit non seulement non-interprétable mais également non-détectable par ledit objet.

A cet égard, on choisira un indice de modulation avantageusement inférieur à un indice seuil compatible avec une non-détectabilité de la modulation par l'objet, par exemple un indice de modulation inférieur à 1%.

De manière générale, il est avantageux que l'indice de modulation utilisé corresponde à l'indice de modulation minimum que le lecteur est capable de démoduler.

Selon un mode de mise en œuvre, le résultat d'une corrélation parfaite entre les deux séquences de données est égal à une valeur de corrélation de référence, typiquement la valeur 1. On détecte alors une absence de l'objet si le résultat de ladite corrélation entre les deux séquences de données est inférieur ou égal à ladite valeur de corrélation de référence et supérieur ou égal à une valeur de corrélation seuil tandis qu'on détecte une présence éventuelle de l'objet si le résultat de ladite corrélation entre les deux séquences de données est inférieur à la valeur de corrélation seuil.

Cette valeur de corrélation seuil est avantageusement déterminée préalablement à ladite phase de détection, au cours d'une phase d'étalonnage effectuée en absence de tout objet.

Plus précisément, selon un mode de mise en œuvre, la détermination de la valeur de corrélation seuil comprend
une transmission par l'antenne du lecteur du champ magnétique sur le signal porteur ayant la sous-porteuse modulée par une séquence de données d'étalonnage (qui peut être identique à ou différente de ladite première séquence de données utilisée dans la phase de détection),
une réception au niveau de l'antenne du lecteur d'un signal résultant de cette transmission,
une démodulation dans le lecteur de la sous-porteuse dudit signal résultant de façon à en extraire une troisième séquence de données,
une corrélation entre la séquence de données d'étalonnage et la troisième séquence de données, le résultat de cette corrélation fournissant ladite valeur de corrélation seuil.

La toute première phase d'étalonnage peut être effectuée par exemple en usine, ou bien préalablement avant la première utilisation du lecteur de façon à tenir compte de l'environnement de celui-ci.

Par ailleurs, le procédé comprend avantageusement, en outre, en cas d'une détection d'une présence de l'objet à l'issue de la phase de détection, une phase de vérification comportant une vérification de la présence effective de l'objet.

Comme indiqué ci-avant, la présence de la sous-porteuse modulée dans ladite phase de détection est choisie avantageusement dans un groupe formé par une ou plusieurs fréquences de référence associées à un ou plusieurs protocoles de communication sans contact de référence susceptibles d'être utilisés par l'objet pour une transmission d'informations vers le lecteur.

Aussi, selon un mode de mise en œuvre, dans la phase de vérification, la vérification de la présence effective de l'objet comprend, pour l'un au moins des protocoles de communication sans contact de référence, une transmission par le lecteur d'informations spécifiques de demandes d'identification, typiquement des requêtes conformes aux protocoles normalisés utilisés, et une attente de la réception d'informations spécifiques en retour, typiquement des acquittements conformes à ladite norme, transmises par l'objet en conformité avec ce protocole de référence.

En pratique, si le lecteur est capable de détecter différents types de cartes, il pourra effectuer cette vérification pour chacun des protocoles de communication pour lequel le démodulateur peut être ajusté sur la fréquence de la sous-porteuse correspondante jusqu'à recevoir un acquittement représentatif de la présence effective d'un objet.

Et, si une fois que tous les protocoles de communication implémentés dans le lecteur auront été testés et qu'aucun acquittement correspondant n'aura été reçu, alors on pourra considérer que la détection éventuelle de l'objet correspondait en fait à une fausse détection qui était par exemple due à l'apparition dans l'environnement du lecteur d'une masse métallique au voisinage de son antenne.

Dans ce cas, en l'absence effective d'objet à l'issue de la phase de vérification, on peut procéder avantageusement à une nouvelle exécution de la phase d'étalonnage de façon à déterminer une nouvelle valeur de corrélation seuil.

Selon un autre aspect, il est proposé un lecteur, capable de communiquer avec un objet par au moins un protocole de communication sans contact via une antenne.

Le lecteur comprend des moyens de traitement configurés pour détecter une présence éventuelle ou absence de l'objet, les moyens de traitement comportant
des moyens de transmission configurés pour transmettre, via ladite antenne, un champ magnétique sur un signal porteur,
des moyens de modulation configurés pour moduler une sous-porteuse du signal porteur par une première séquence de données, ladite modulation étant au moins non interprétable par ledit objet,
des moyens de réception configurés pour recevoir au niveau de l'antenne un signal résultant de cette transmission,
des moyens de démodulation configurés pour effectuer une démodulation de ladite sous-porteuse dudit signal résultant de façon à en extraire une deuxième séquence de données,
des moyens de corrélation configurés pour effectuer une corrélation entre les deux séquences de données, et
des moyens d'analyse configurés pour effectuer la détection de la présence éventuelle ou de l'absence dudit objet en fonction du résultat de la corrélation.

Selon un mode de réalisation, les moyens de modulation sont configurés pour moduler ladite sous-porteuse avec une modulation non détectable par ledit objet.

Selon un mode de réalisation, les moyens de modulation sont configurés pour moduler ladite sous-porteuse avec un indice de modulation inférieur à un indice seuil compatible avec une non-détectabilité de ladite modulation par l'objet.

L'indice de modulation peut être par exemple inférieur à 1%.

Cela étant plus généralement les moyens de modulation sont avantageusement configurés pour moduler ladite sous-porteuse avec un indice de modulation correspondant à l'indice de modulation minimum capable d'être démodulé par les moyens de démodulation.

Selon un mode de réalisation, dans lequel le résultat d'une corrélation parfaite étant égale à une valeur de corrélation de référence, les moyens d'analyse sont configurés pour détecter une absence de l'objet si le résultat de ladite corrélation entre les deux séquences de données est inférieur ou égal à ladite valeur de corrélation de référence et supérieur ou égal à une valeur de corrélation seuil, et pour détecter une présence éventuelle de l'objet si le résultat de ladite corrélation entre les deux séquences de données est inférieur à la valeur de corrélation seuil.

Selon un mode de réalisation, le lecteur comprend en outre de moyens d'étalonnage configurés pour déterminer en absence de tout objet, ladite valeur de corrélation seuil.

Selon un mode de réalisation, les moyens d'étalonnage comprennent les moyens de modulation configurés pour moduler la sous-porteuse par une séquence de données d'étalonnage, les moyens de réception configurés pour recevoir au niveau de l'antenne du lecteur un signal résultant de la transmission via ladite antenne de ladite sous-porteuse modulée, les moyens de démodulation configurés pour démoduler la sous-porteuse dudit signal résultant de façon à en extraire une troisième séquence de données, et les moyens de corrélation configurés pour effectuer une corrélation entre la séquence de données d'étalonnage et la troisième séquence de données, le résultat de cette corrélation fournissant ladite valeur de corrélation seuil.

Selon un mode de réalisation, le lecteur comprend en outre des moyens de vérification configurés pour, en cas d'une détection d'une présence éventuelle de l'objet, vérifier la présence effective de l'objet.

Selon un mode de réalisation, le lecteur comprend une chaîne de réception connectée à ladite antenne, configurée pour permettre une réception d'informations depuis ledit objet selon ledit au moins un protocole de communication sans contact et comportant les moyens de démodulation capables de démoduler lors de ladite réception d'informations une sous porteuse modulée avec une fréquence de référence choisie dans un groupe formé par une ou plusieurs fréquences de référence associées à un ou plusieurs protocoles de communication sans contact de référence susceptibles d'être utilisées par l'objet pour une transmission d'informations vers le lecteur, et
les moyens de traitement comportent la chaîne de réception, la fréquence de la sous-porteuse utilisée par les moyens de traitement étant choisie dans ledit groupe.

Selon un mode de réalisation, les moyens de vérification comprennent une chaîne d'émission et la chaîne de réception et sont configurés pour, pour l'un au moins des protocoles de communication sans contact de référence, transmettre des informations spécifiques de demande d'identification conforme à ce protocole de référence et attendre la réception d'informations spécifiques en retour transmises par l'objet en conformité avec ce protocole de référence.

Selon un mode de réalisation, les moyens d'étalonnage sont configurés pour en l'absence effective d'objet, déterminer une nouvelle valeur de corrélation seuil.

D'autres avantages et caractéristiques de l'invention apparaîtront à la lecture de la description détaillée de modes de mise en œuvre et de réalisation de l'invention, nullement limitative, et des dessins annexés sur lesquels :

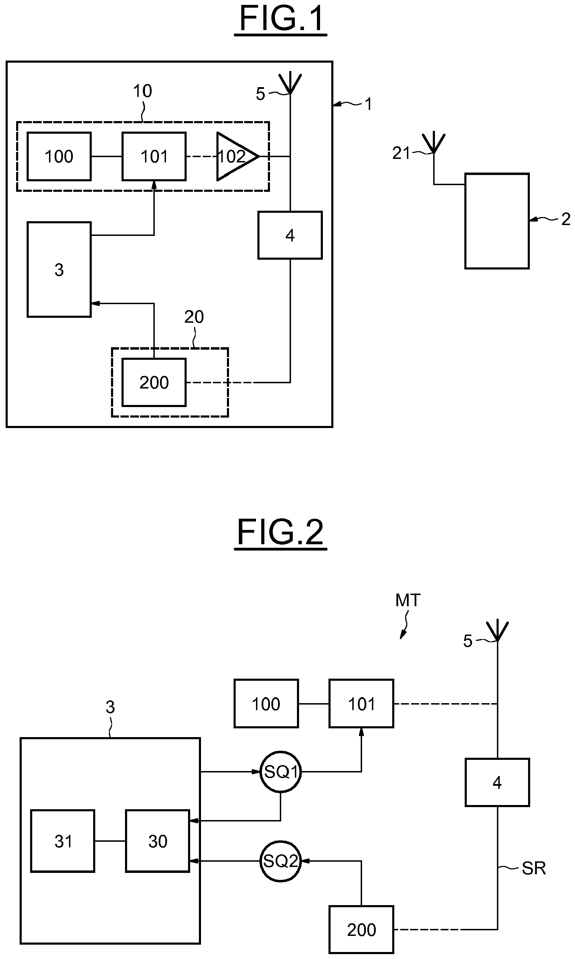

- les figures 1 à 7 ont trait à des modes de mise en œuvre et de réalisation de l'invention.

Sur la figure 1, la référence 1 désigne un lecteur, par exemple mais non limitativement un téléphone mobile cellulaire émulé en mode lecteur ou bien un lecteur classique de carte à puce sans contact ou d'étiquette (tag) tel qu'un badge.

La référence 2 désigne un objet sans contact, par exemple un téléphone mobile cellulaire émulé en mode carte et plus généralement un transpondeur électromagnétique (tag) tel qu'une étiquette ou un badge.

Ces deux dispositifs (le lecteur et l'objet), qui sont dans cet exemple des dispositifs NFC, forment un système de communication sans contact permettant d'effectuer une communication champ proche du type NFC entre les deux dispositifs.

A cet égard, le lecteur 1 possède une antenne 5 et l'étiquette 2 possède une antenne 21, ces deux antennes étant destinées à être couplées par champs magnétiques proches générés par le lecteur.

Le lecteur comprend une chaîne classique de transmission 10 connectée entre un module de traitement numérique 3, par exemple un processeur, et l'antenne 5.

La chaîne de transmission comprend de façon classique des moyens 100 configurés pour générer une succession d'impulsions à une fréquence porteuse, par exemple 13,56 MHz. Un modulateur 101 permet de moduler le signal porteur en fonction des informations à transmettre vers l'objet. La chaîne de transmission comporte également un amplificateur 102 connecté à l'antenne 5.

D'autres moyens classiques et connus de cette chaîne de transmission n'ont pas été représentés à des fins de simplification.

Les informations transmises du lecteur vers l'objet sont démodulées par la chaîne de réception de l'objet 2.

Pour effectuer la transmission des informations de l'étiquette 2 vers le lecteur 1, le lecteur génère via son antenne 5 un champ magnétique non modulé en amplitude, par exemple dans les communications NFC l'onde sinusoïdale à 13,56 MHz.

Du côté étiquette, l'antenne 21 module le champ généré par le lecteur. Cette modulation est effectuée par l'objet en modifiant la charge connectée aux bornes de l'antenne 21. Il en résulte un changement dans les amplitudes des tensions et courants présents au niveau des antennes 21 et 5.

Cette modulation est effectuée à une fréquence de sous-porteuse égale par exemple à 848 KHz dans le cas des protocoles A et B de la norme ISO 14443.

Une copie du courant circulant dans l'antenne 5 est générée de façon à l'injecter dans la chaîne de réception 20 du lecteur où le signal résultant est démodulé dans un démodulateur 200 de façon à extraire les informations transmises.

Le bloc 4 du lecteur schématise les moyens classiques permettant la génération de la copie du courant circulant dans l'antenne 5.

La figure 2 illustre de façon schématique des moyens de traitement MT configurés pour détecter une présence éventuelle ou une absence de l'objet 2.

A cet égard, les moyens de traitement utilisent une partie des chaînes d'émission et de réception du lecteur 1.

Plus précisément, une première séquence de données SQ1, comportant des « 0 » et des « 1 » logiques, est délivrée au modulateur 101 de la chaîne d'émission de façon à moduler une sous-porteuse du signal porteur généré par le générateur 100.

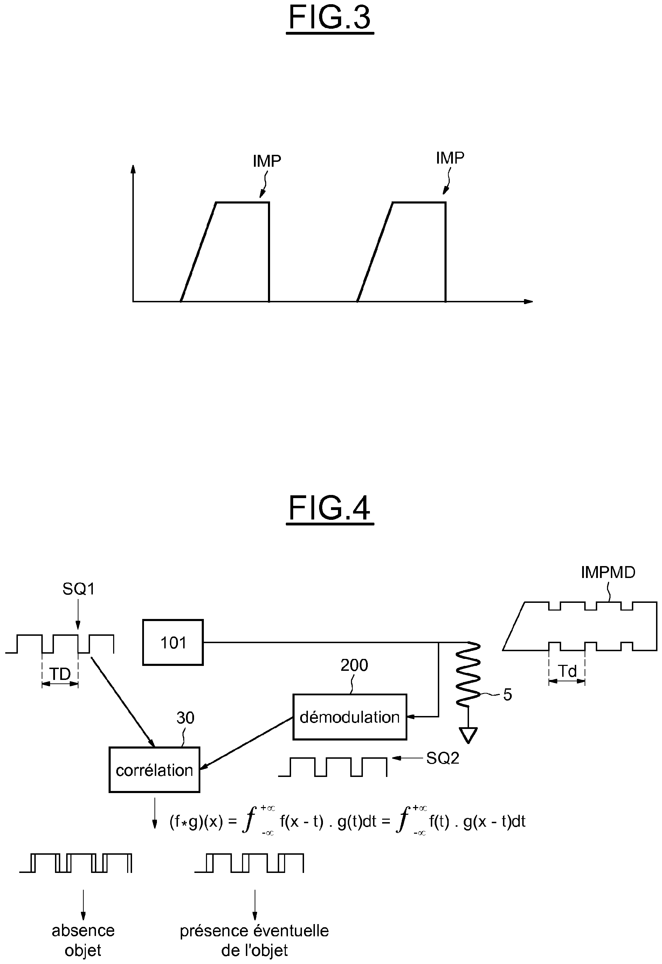

La figure 3 illustre les impulsions IMP du champ magnétique généré à 13,56 MHz (le signal porteur).

Par contre, comme illustré sur la figure 4, la modulation d'une sous-porteuse, par exemple une sous-porteuse à 848 KHz, du signal porteur, par la première séquence de données SQ1 permet de délivrer à l'antenne 5 un signal porteur ayant une sous-porteuse modulée par la première séquence de données, ce signal transmis comportant les impulsions IMPMD illustrées sur la figure 4.

Le lecteur reçoit alors au niveau de l'antenne le signal SR résultant de cette transmission c'est-à-dire résultant de sa propre modulation de sous-porteuse et démodule dans le démodulateur, ajusté sur la fréquence de la sous-porteuse, ici 848 KHz, ce signal résultant de façon à en extraire une deuxième séquence de données SQ2 (figure 2).

Le processeur 3 comprend alors des moyens de corrélation 30 capables d'effectuer une corrélation entre les deux séquences de données SQ1 et SQ2 de façon à délivrer un résultat de corrélation.

Ce résultat de corrélation est ensuite analysé dans des moyens d'analyse 31.

Comme illustré schématiquement sur la figure 4, la corrélation est effectuée entre les deux séquences de données SQ1 et SQ2 conformément à la formule illustrée sur cette figure 4.

Si les deux séquences de corrélation SQ1 et SQ2 correspondent à peu près, alors on peut en déduire qu'il y a une absence de l'objet.

Par contre, s'il y a un décalage plus important entre les deux séquences de données, alors on peut en déduire une présence éventuelle de l'objet. Ce décalage est dû à un désaccord des circuits résonnants du lecteur et de l'objet.

Cela étant, comme on le verra plus en détail ci-après, ce désaccord peut également provenir d'une proximité d'une masse métallique, par exemple de l'antenne 5 du lecteur.

Comme illustré sur la figure 4, les impulsions modulées IMPMD correspondent à une modulation de la sous-porteuse ayant ici une fréquence de 848 KHz. En conséquence, cette fréquence de modulation Fd (ici égale à 848 KHz) correspond à une période Td de la première séquence de données SQ1 que l'on retrouve sur les impulsions modulées IMPMD.

Le fait d'utiliser pour la modulation de la sous-porteuse une fréquence utilisée par l'objet pour la transmission de ces informations vers le lecteur, permet d'utiliser avantageusement la chaîne de réception et notamment le démodulateur du lecteur, ce qui permet d'obtenir une détection de l'objet avec une sensibilité au moins aussi bonne que celle obtenue dans la phase de communication entre le lecteur et l'objet une fois celui-ci détecté.

Cela étant, l'indice de modulation est avantageusement choisi de façon à ce que cette modulation de la sous-porteuse soit au moins non interprétable, et de préférence non détectable par l'objet.

Comme il est bien connu de l'homme du métier, l'indice de modulation représente la profondeur des creux d'amplitude et est obtenu par la formule (Amax-Amin)/(Amax+Amin), Amax et Amin désignant respectivement les niveaux maximum et minimum de l'amplitude.

A titre indicatif, si l'amplitude des impulsions non modulées est de 10 volts, et qu'on choisit une modulation de 1 millivolt, on obtiendra alors un indice de modulation de l'ordre de 0,01%, ce qui rend cette modulation non détectable par l'objet.

Cela étant, un indice de modulation inférieur à 1% est également satisfaisant pour rendre la modulation non détectable par l'objet.

En pratique il est avantageux que l'indice de modulation utilisé par les moyens de modulation soit égal (corresponde) à l'indice de modulation minimum que les moyens de démodulation sont capables de démoduler.

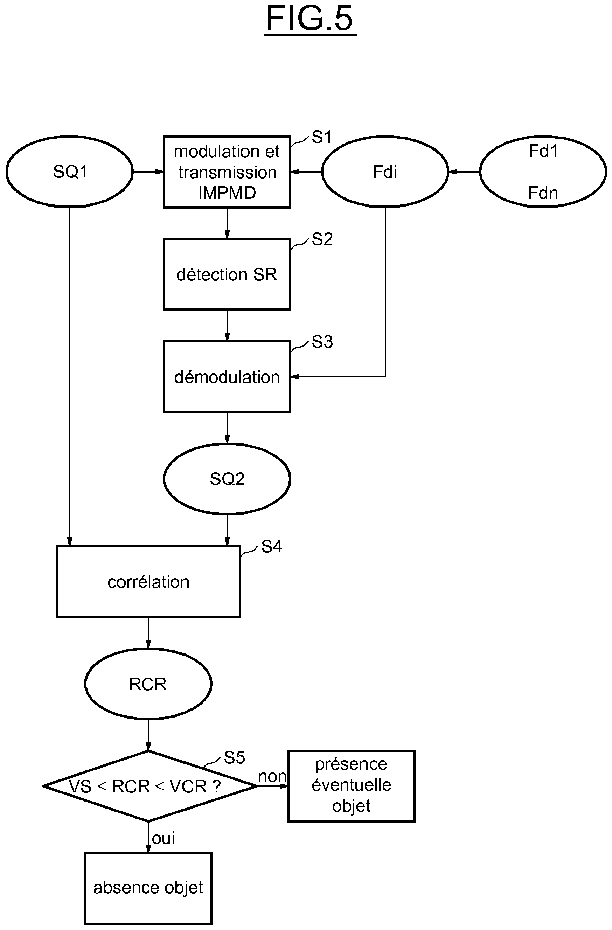

On se réfère maintenant plus particulièrement à la figure 5, pour décrire un mode de mise en œuvre d'une phase de détection de la présence éventuelle ou de l'absence de l'objet 2.

Dans l'étape S1, on effectue, comme indiqué ci-avant, la modulation et la transmission des impulsions modulées IMPMD en utilisant la première séquence de données SQ1 et pour la fréquence de modulation, une fréquence de référence Fdi qui peut être choisie parmi un groupe de fréquences de référence Fd1-Fdn susceptibles d'être utilisées par ledit objet en conformité avec les protocoles de communication susceptibles d'être utilisés par cet objet.

Dans l'exemple, on choisira la fréquence Fdi=848 KHz.

Dans l'étape S2, on détecte au niveau de l'antenne le signal SR résultant de cette transmission et on injecte une copie du courant circulant dans l'antenne 5 du lecteur dans la chaîne de réception 20.

Dans l'étape S3, on procède à la démodulation de ce signal résultant SR de façon à obtenir la deuxième séquence de la donnée SQ2.

On effectue dans l'étape S4 la corrélation entre la première séquence de données SQ1 et la deuxième séquence de données SQ2 de façon à obtenir un résultat de corrélation RCR.

Puis, les moyens d'analyse 31 analysent ce résultat de corrélation.

A cet égard, une corrélation parfaite entre la première séquence de données SQ1 et la deuxième séquence de données SQ2 conduit à un résultat de corrélation RCR égal à une valeur de corrélation de référence, typiquement égale à 1.

Cela étant, en fonction de l'environnement du lecteur et du bruit, on définit une valeur de corrélation seuil VS, au moyen, comme on le verra plus en détail ci-après, d'une phase d'étalonnage, et on considère alors que si le résultat de corrélation RCR est inférieur ou égal à la valeur de corrélation de référence VCR et supérieur ou égal à la valeur de corrélation de seuil VS, qu'on se trouve en absence d'objet.

Par contre, si le résultat de corrélation RCR est inférieur à la valeur seuil VS, alors on peut en conclure qu'il y a une présence éventuelle d'un objet.

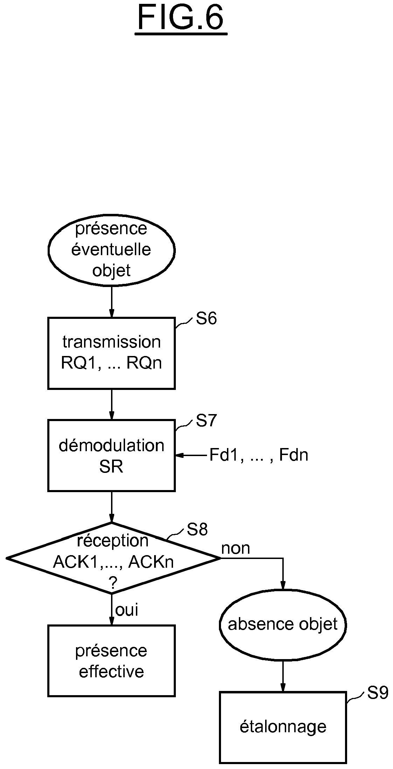

On effectue alors une phase de vérification de la présence effective de cet objet, dont un exemple est illustré sur la figure 6.

Cette phase de vérification est effectuée par des moyens de vérification qui comprennent ici la chaîne d'émission et la chaîne de réception.

Dans cette phase de vérification, le lecteur transmet (étape S6) pour l'un au moins des protocoles de communication sans contact susceptibles d'être utilisés par l'objet, et par exemple successivement pour tous les protocoles de communication sans contact susceptibles d'être utilisés par l'objet, des informations spécifiques de demandes d'identification, par exemple des requêtes, RQ1, ...RQn conformes à ce ou ces protocoles de référence.

Le lecteur démodule alors dans l'étape S7 le signal résultant reçu au niveau de l'antenne en utilisant la fréquence de référence modulant la sous-porteuse utilisée par l'objet pour répondre conformément au protocole qui est implémenté au sein de l'objet.

On vérifie alors dans l'étape S8 que l'on reçoit des informations spécifiques en retour, par exemple des acquittements ACQ1, ... ACQn correspondant respectivement aux requêtes RQ1, ...RQn.

Si l'on reçoit en réponse à une requête RQi l'accusé de réception correspondant normalisé ACQi, alors on peut en conclure qu'on est en présence effective de l'objet et que cet objet communique avec un certain protocole de communication.

Si par contre on ne reçoit aucun accusé de réception ACQi, alors on peut en conclure qu'il n'y a pas d'objet au voisinage proche du lecteur et que cette détection éventuelle d'objet qui s'était avérée positive est en fait une fausse détection due par exemple à l'apparition d'une masse métallique au voisinage du lecteur.

On procède alors avantageusement, comme illustré sur la figure 6, à une nouvelle phase d'étalonnage S9.

Une phase d'étalonnage, qu'elle soit effectuée avant toute phase de détection, ou bien en réponse à une détection éventuelle d'objet qui s'est avérée en fait être une fausse détection, permet de déterminer la valeur de corrélation seuil VS ou bien une nouvelle valeur de corrélation seuil VS.

Cette phase d'étalonnage est effectuée par des moyens d'étalonnage comprenant
les moyens de modulation configurés pour moduler la sous-porteuse par une séquence de données d'étalonnage,
les moyens de réception configurés pour recevoir au niveau de l'antenne du lecteur un signal résultant de la transmission via ladite antenne de ladite sous-porteuse modulée,
les moyens de démodulation configurés pour démoduler la sous-porteuse dudit signal résultant de façon à en extraire une troisième séquence de données, et
les moyens de corrélation configurés pour effectuer une corrélation entre la séquence de données d'étalonnage et la troisième séquence de données.

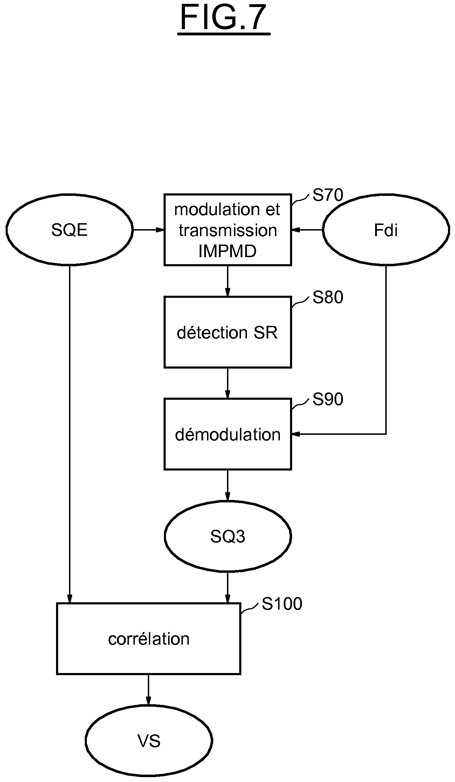

Plus précisément, comme illustré sur la figure 7, on procède dans l'étape S70 à une modulation et à une transmission d'impulsions modulées IMPMD d'une façon analogue à ce qui a été décrit ci-avant, en utilisant une ou l'une des fréquences de sous-porteuses de référence Fdi ainsi qu'une séquence de données d'étalonnage SQE qui peut être identique à ou différente de la première séquence de données SQ1.

On détecte dans l'étape S80 le signal résultant de cette transmission (signal SR) que l'on démodule dans l'étape S90 au sein du démodulateur de la chaîne de réception de façon à obtenir une troisième séquence de données SQ3.

Puis, on effectue la corrélation entre la séquence de données d'étalonnage SQE et la troisième séquence de données SQ3 (étape S100), le résultat de cette corrélation fournissant la valeur de corrélation seuil initiale VS ou une nouvelle valeur de corrélation seuil VS.

## Revendications

1. Procédé de détection de la présence éventuelle d'un objet par un lecteur capables de communiquer mutuellement par au moins un protocole de communication sans contact, comprenant une phase de détection comportant une transmission par une antenne du lecteur d'un champ magnétique sur un signal porteur ayant une sous-porteuse modulée par une première séquence de données (SQ1), ladite modulation (101) étant au moins non interprétable par ledit objet, une réception au niveau de l'antenne du lecteur d'un signal résultant de cette transmission, une démodulation (200) dans le lecteur de la sous-porteuse dudit signal résultant de façon à en extraire une deuxième séquence de données (SQ2), une corrélation (30) entre les deux séquences de données et une détection de la présence éventuelle ou de l'absence dudit objet en fonction du résultat de la corrélation.

2. Procédé selon la revendication 1, dans lequel ladite modulation est non détectable par ledit objet.

3. Procédé selon la revendication 2, dans lequel ladite modulation a un indice de modulation inférieur à un indice seuil compatible avec une non-détectabilité de ladite modulation par l'objet.

4. Procédé selon la revendication 3, dans lequel l'indice de modulation est inférieur à 1%.

5. Procédé selon la revendication 3 ou 4, dans lequel l'indice de modulation correspond à un indice minimum capable d'être démodulé.

6. Procédé selon l'une des revendications précédentes, dans lequel, le résultat d'une corrélation parfaite étant égale à une valeur de corrélation de référence (VCR), on détecte une absence de l'objet si le résultat (RCR) de ladite corrélation entre les deux séquences de données est inférieur ou égal à ladite valeur de corrélation de référence (VCR) et supérieur ou égal à une valeur de corrélation seuil (VS), et on détecte une présence éventuelle de l'objet si le résultat (RCR) de ladite corrélation entre les deux séquences de données est inférieur à la valeur de corrélation seuil (VS).

7. Procédé l'une des revendications précédentes, comprenant en outre préalablement à ladite phase de détection, une phase d'étalonnage comportant en absence de tout objet, une détermination de ladite valeur de corrélation seuil (VS).

8. Procédé selon la revendication 7, dans lequel la détermination de la valeur de corrélation seuil comprend la transmission (S70), par l'antenne du lecteur du champ magnétique sur le signal porteur ayant la sous-porteuse modulée par une séquence de données d'étalonnage (SQE), une réception au niveau de l'antenne du lecteur d'un signal (SR) résultant de cette transmission, une démodulation (S90) dans le lecteur de la sous-porteuse dudit signal résultant de façon à en extraire une troisième séquence de données (SQ3), une corrélation (S100) entre la séquence de données d'étalonnage et la troisième séquence de données, le résultat de cette corrélation fournissant ladite valeur de corrélation seuil (VS).

9. Procédé selon l'une des revendications précédentes, comprenant en outre, en cas d'une détection d'une présence éventuelle de l'objet à l'issue de la phase de détection, une phase de vérification (S6-S8) comportant une vérification de la présence effective de l'objet.

10. Procédé selon l'une des revendications précédentes, dans lequel la fréquence de la sous-porteuse modulée dans ladite phase de détection est choisie dans un groupe formé par une ou plusieurs fréquences de référence (Fdi) associées à un ou plusieurs protocoles de communication sans contact de référence susceptibles d'être utilisées par l'objet pour une transmission d'informations vers le lecteur.

11. Procédé selon les revendications 9 et 10, dans lequel dans la phase de vérification, la vérification de la présence effective de l'objet comprend, pour l'un au moins des protocoles de communication sans contact de référence, une transmission par le lecteur d'informations spécifiques de demande d'identification (RQi) conforme à ce protocole de référence et une attente de la réception d'informations spécifiques en retour (ACKi) transmises par l'objet en conformité avec ce protocole de référence.

12. Procédé selon la revendication 7 ou 8 prise en combinaison avec l'une des revendications 9 ou 11, comprenant une nouvelle exécution (S9) de la phase d'étalonnage en l'absence effective d'objet, de façon à déterminer une nouvelle valeur de corrélation seuil.

13. Lecteur, capable de communiquer avec un objet par au moins un protocole de communication sans contact via une antenne, **caractérisé en ce qu'**il comprend en outre des moyens de traitement (MT) configurés pour détecter une présence éventuelle ou absence de l'objet, les moyens de traitement comportant des moyens de transmission (10) configurés pour transmettre, via ladite antenne, un champ magnétique sur un signal porteur, des moyens de modulation (101) configurés pour moduler une sous-porteuse du signal porteur par une première séquence de données, ladite modulation étant au moins non interprétable par ledit objet, des moyens de réception (4) configurés pour recevoir au niveau de l'antenne (5) un signal (SR) résultant de cette transmission, des moyens de démodulation (200) configurés pour effectuer une démodulation de ladite sous-porteuse dudit signal résultant de façon à en extraire une deuxième séquence de données, des moyens de corrélation (30) configurés pour effectuer une corrélation entre les deux séquences de données et des moyens d'analyse (31) configurés pour effectuer la détection de la présence éventuelle ou de l'absence dudit objet en fonction du résultat de la corrélation.

14. Lecteur selon la revendication 13, dans lequel les moyens de modulation (101) sont configurés pour moduler ladite sous porteuse avec une modulation non détectable par ledit objet.

15. Lecteur selon la revendication 14, dans lequel les moyens de modulation (101) sont configurés pour moduler ladite sous porteuse avec un indice de modulation inférieur à un indice seuil compatible avec une non-détectabilité de ladite modulation par l'objet.

16. Lecteur selon la revendication 15, dans lequel les moyens de modulation (101) sont configurés pour moduler ladite sous porteuse avec un indice de modulation inférieur à 1%.

17. Lecteur selon l'une des revendications 15 ou 16, dans lequel les moyens de modulation (101) sont configurés pour moduler ladite sous porteuse avec un indice de modulation correspondant à l'indice de modulation minimum capable d'être démodulé par les moyens de démodulation (200).

18. Lecteur selon l'une des revendications 13 à 17, dans lequel, le résultat d'une corrélation parfaite étant égale à une valeur de corrélation de référence, les moyens d'analyse (31) sont configurés pour détecter une absence de l'objet si le résultat de ladite corrélation entre les deux séquences de données est inférieur ou égal à ladite valeur de corrélation de référence et supérieur ou égal à une valeur de corrélation seuil, et pour détecter une présence éventuelle de l'objet si le résultat de ladite corrélation entre les deux séquences de données est inférieur à la valeur de corrélation seuil.

19. Lecteur selon la revendication 18, comprenant en outre des moyens d'étalonnage configuré pour déterminer en absence de tout objet, ladite valeur de corrélation seuil.

20. Lecteur selon la revendication 19, dans lequel les moyens d'étalonnage comprennent les moyens de modulation (101) configurés pour moduler la sous-porteuse par une séquence de données d'étalonnage (SQE), les moyens de réception (4) configurés pour recevoir au niveau de l'antenne (5) du lecteur un signal résultant de la transmission via ladite antenne de ladite sous-porteuse modulée, les moyens de démodulation (200) configurés pour démoduler la sous-porteuse dudit signal résultant de façon à en extraire une troisième séquence de données, et les moyens de corrélation (30) configurés pour effectuer une corrélation entre la séquence de données d'étalonnage et la troisième séquence de données, le résultat de cette corrélation fournissant ladite valeur de corrélation seuil.

21. Lecteur selon l'une des revendications 13 à 20, comprenant en outre des moyens de vérification configurés pour, en cas d'une détection d'une présence éventuelle de l'objet, vérifier la présence effective de l'objet.

22. Lecteur selon l'une des revendications 13 à 21, comprenant
une chaîne de réception (20) connectée à ladite antenne (5), configurée pour permettre une réception d'informations depuis ledit objet selon ledit au moins un protocole de communication sans contact et comportant les moyens de démodulation (200) capables de démoduler lors de ladite réception d'informations une sous porteuse modulée avec une fréquence de référence choisie dans un groupe formé par une ou plusieurs fréquences de référence (Fdi) associées à un ou plusieurs protocoles de communication sans contact de référence susceptibles d'être utilisées par l'objet pour une transmission d'informations vers le lecteur, et
dans lequel les moyens de traitement (MT) comportent la chaîne de réception, la fréquence de la sous-porteuse utilisée par les moyens de traitement étant choisie dans ledit groupe.

23. Lecteur selon les revendications 21 et 22, dans lequel les moyens de vérification comprennent une chaîne d'émission (10) et la chaîne de réception (20) et sont configurés pour, pour l'un au moins des protocoles de communication sans contact de référence, transmettre des informations spécifiques de demande d'identification conforme à ce protocole de référence et attendre la réception d'informations spécifiques en retour transmises par l'objet en conformité avec ce protocole de référence.

24. Lecteur selon la revendication 19 ou 20 prise en combinaison avec l'une des revendications 21 ou 23, dans lequel les moyens d'étalonnage sont configurés pour en l'absence effective d'objet, déterminer une nouvelle valeur de corrélation seuil (VS).

## Patentansprüche

1. Verfahren zur Detektion der eventuellen Anwesenheit eines Objekts durch einen Leser, die imstande sind, durch mindestens ein kontaktloses Kommunikationsprotokoll wechselseitig zu kommunizieren, eine Detektionsphase umfassend, die eine Übertragung, durch eine Antenne des Lesers, eines Magnetfeldes auf einem Trägersignal, das einen durch eine erste Datensequenz (SQ1) modulierten Unterträger aufweist, wobei die Modulation (101) mindestens durch das Objekt nicht interpretierbar ist, einen Empfang, im Bereich der Antenne des Lesers, eines Signals, das aus dieser Übertragung resultiert, eine Demodulation (200), in dem Leser des Unterträgers, des resultierenden Signals, um daraus eine zweite Datensequenz (SQ2) zu extrahieren, eine Korrelation (30) zwischen den beiden Datensequenzen und eine Detektion der eventuellen Anwesenheit oder der Abwesenheit des Objekts in Abhängigkeit des Ergebnisses der Korrelation, beinhaltet.

2. Verfahren nach Anspruch 1, wobei die Modulation durch das Objekt nicht detektierbar ist.

3. Verfahren nach Anspruch 2, wobei die Modulation einen Modulationsindex aufweist, der kleiner als ein Schwellenindex ist, der mit einer Nicht-Detektierbarkeit der Modulation durch das Objekt kompatibel ist.

4. Verfahren nach Anspruch 3, wobei der Modulationsindex kleiner als 1 % ist.

5. Verfahren nach Anspruch 3 oder 4, wobei der Modulationsindex einem minimalen Index entspricht, der imstande ist, demoduliert zu werden.

6. Verfahren nach einem der vorstehenden Ansprüche, wobei, da das Ergebnis einer perfekten Korrelation gleich einem Referenzkorrelationswert (VCR) ist, eine Abwesenheit des Objekts detektiert wird, wenn das Ergebnis (RCR) der Korrelation zwischen den beiden Datensequenzen kleiner oder gleich dem Referenzkorrelationswert (VCR) ist, und größer oder gleich einem Schwellenkorrelationswert (VS) ist, und eine eventuelle Anwesenheit des Objekts detektiert wird, wenn das Ergebnis (RCR) der Korrelation zwischen den beiden Datensequenzen kleiner als der Schwellenkorrelationswert (VS) ist.

7. Verfahren nach einem der vorstehenden Ansprüche, weiter vor der Detektionsphase eine Eichphase umfassend, die bei Abwesenheit von allen Objekten eine Bestimmung des Schwellenkorrelationswerts (VS) beinhaltet.

8. Verfahren nach Anspruch 7, wobei die Bestimmung des Schwellenkorrelationswerts die Übertragung (S70), durch die Antenne des Lesers, des Magnetfelds auf dem Trägersignal, das den durch eine Eichdatensequenz (SQE) modulierten Unterträger aufweist, einen Empfang im Bereich der Antenne des Lesers eines Signals (SR), das aus dieser Übertragung resultiert, eine Demodulation (S90) in dem Leser des Unterträgers des resultierenden Signals, um daraus eine dritte Datensequenz (SQ3) zu extrahieren, eine Korrelation (S100) zwischen der Eichdatensequenz und der dritten Datensequenz umfasst, wobei das Ergebnis dieser Korrelation den dritten Schwellenkorrelationswert (VS) bereitstellt.

9. Verfahren nach einem der vorstehenden Ansprüche, im Falle einer Detektion einer eventuellen Anwesenheit des Objekts am Ende der Detektionsphase weiter eine Überprüfungsphase (S6-S8) umfassend, die eine Überprüfung der effektiven Anwesenheit des Objekts beinhaltet.

10. Verfahren nach einem der vorstehenden Ansprüche, wobei die Frequenz des in der Detektionsphase modulierten Unterträgers aus einer Gruppe ausgewählt wird, die durch eine oder mehrere Referenzfrequenzen (Fdi) gebildet wird, die einem oder mehreren kontaktlosen Referenz-Kommunikationsprotokollen zugeordnet sind, die von dem Objekt für eine Übertragung von Informationen zum Leser verwendet werden können.

11. Verfahren nach den Ansprüchen 9 und 10, wobei in der Überprüfungsphase die Überprüfung der effektiven Anwesenheit des Objekts für mindestens eines der kontaktlosen Referenz-Kommunikationsprotokolle eine Übertragung, durch den Leser, spezifischer Identifizierungsanfrageinformationen (RQi) entsprechend diesem Referenzprotokoll, und ein Warten auf den Empfang spezifischer Informationen im Gegenzug (ACKi), die von dem Objekt entsprechend diesem Referenzprotokoll übertragen werden, umfasst.

12. Verfahren nach Anspruch 7 oder 8 in Kombination mit einem der Ansprüche 9 bis 11, eine erneute Ausführung (S9) der Eichphase bei effektiver Abwesenheit des Objekts umfassend, um einen neuen Schwellenkorrelationswert zu bestimmen.

13. Leser, der imstande ist, mit einem Objekt durch mindestens ein kontaktloses Kommunikationsprotokoll über eine Antenne zu kommunizieren, **dadurch gekennzeichnet, dass** er weiter Verarbeitungsmittel (MT) umfasst, die konfiguriert sind, um eine eventuelle Anwesenheit oder Abwesenheit des Objekts zu detektieren, wobei die Verarbeitungsmittel Übertragungsmittel (10) beinhalten, die konfiguriert sind, um über die Antenne ein Magnetfeld auf einem Trägersignal zu übertragen, Modulationsmittel (101), die konfiguriert sind, um einen Unterträger des Trägersignals durch eine erste Datensequenz zu modulieren, wobei die Modulation mindestens durch das Objekt nicht interpretierbar ist, Empfangsmittel (4), die konfiguriert sind, um im Bereich der Antenne (5) ein Signal (SR) zu empfangen, das aus dieser Übertragung resultiert, Demodulationsmittel (200), die konfiguriert sind, um eine Demodulation des Unterträgers des resultierenden Signals durchzuführen, um daraus eine zweite Datensequenz zu extrahieren, Korrelationsmittel (30), die konfiguriert sind, um eine Korrelation zwischen den beiden Datensequenzen durchzuführen, und Analysemittel (31), die konfiguriert sind, um die Detektion der eventuellen Anwesenheit oder der Abwesenheit des Objekts in Abhängigkeit von dem Ergebnis der Korrelation durchzuführen.

14. Leser nach Anspruch 13, wobei die Modulationsmittel (101) konfiguriert sind, um den Unterträger mit einer Modulation zu modulieren, die durch das Objekt nicht detektierbar ist.

15. Leser nach Anspruch 14, wobei die Modulationsmittel (101) konfiguriert sind, um den Unterträger mit einem Modulationsindex zu modulieren, der kleiner als ein Schwellenindex ist, der mit einer Nicht-Detektierbarkeit der Modulation durch das Objekt kompatibel ist.

16. Leser nach Anspruch 15, wobei die Modulationsmittel (101) konfiguriert sind, um den Unterträger mit einem Modulationsindex kleiner als 1 % zu modulieren.

17. Leser nach einem der Ansprüche 15 oder 16, wobei die Modulationsmittel (101) konfiguriert sind, um den Unterträger mit einem Modulationsindex zu modulieren, der einem minimalen Modulationsindex entspricht, der imstande ist durch die Demodulationsmittel (200) demoduliert zu werden.

18. Leser nach einem der Ansprüche 13 bis 17, wobei, da das Ergebnis einer perfekten Korrelation gleich einem Referenzkorrelationswert ist, die Analysemittel (31) konfiguriert sind, um eine Abwesenheit des Objekts zu detektieren, wenn das Ergebnis der Korrelation zwischen den beiden Datensequenzen kleiner oder gleich dem Referenzkorrelationswert ist, und größer oder gleich einem Schwellenkorrelationswert ist, und um eine eventuelle Anwesenheit des Objekts zu detektieren, wenn das Ergebnis der Korrelation zwischen den beiden Datensequenzen kleiner als der Schwellenkorrelationswert ist.

19. Leser nach Anspruch 18, weiter Eichmittel umfassend, die konfiguriert sind, um bei Abwesenheit aller Objekte den Schwellenkorrelationswert zu bestimmen.

20. Leser nach Anspruch 19, wobei die Eichmittel die Modulationsmittel (101), die konfiguriert sind, um den Unterträger durch eine Eichdatensequenz (SQE) zu modulieren, die Empfangsmittel (4), die konfiguriert sind, um im Bereich der Antenne (5) des Lesers ein Signal zu empfangen, das aus der Übertragung des modulierten Unterträgers über die Antenne resultiert, die Demodulationsmittel (200), die konfiguriert sind, um den Unterträger des resultierenden Signals zu demodulieren, um daraus eine dritte Datensequenz zu extrahieren, und die Korrelationsmittel (30), die konfiguriert sind, um eine Korrelation zwischen der Eichdatensequenz und der dritten Datensequenz durchzuführen, umfassen, wobei das Ergebnis dieser Korrelation den dritten Schwellenkorrelationswert bereitstellt.

21. Leser nach einem der Ansprüche 13 bis 20, weiter Überprüfungsmittel umfassend, die konfiguriert sind, um im Falle einer Detektion einer eventuellen Anwesenheit des Objekts die effektive Anwesenheit des Objekts zu überprüfen.

22. Leser nach einem der Ansprüche 13 bis 21, umfassend eine Empfangskette (20), die mit der Antenne (5) verbunden ist, die konfiguriert ist, um einen Empfang von Informationen von dem Objekt gemäß dem mindestens einen kontaktlosen Kommunikationsprotokoll zu ermöglichen, und die Demodulationsmittel (200) beinhaltend, die imstande sind, bei Empfang von Informationen einen mit einer Referenzfrequenz modulierten Unterträger zu demodulieren, die aus einer Gruppe ausgewählt wird, die durch eine oder mehrere Referenzfrequenzen (Fdi) gebildet wird, die einem oder mehreren kontaktlosen Referenz-Kommunikationsprotokollen zugeordnet sind, die von dem Objekt für eine Übertragung von Informationen zum Leser verwendet werden können, und
wobei die Verarbeitungsmittel (MT) die Empfangskette beinhalten, wobei die Frequenz des Unterträgers, die von den Verarbeitungsmitteln verwendet wird, aus der Gruppe ausgewählt wird.

23. Leser nach den Ansprüchen 21 und 22, wobei die Überprüfungsmittel eine Sendekette (10) und die Empfangskette (20) umfassen, und konfiguriert sind, um für mindestens eines der kontaktlosen Kommunikationsprotokolle spezifische Identifizierungsanfrageinformationen entsprechend diesem Referenzprotokoll zu übertragen, und auf den Empfang spezifischer Informationen im Gegenzug, die von dem Objekt entsprechend diesem Referenzprotokoll übertragen werden, zu warten.

24. Leser nach dem Anspruch 19 oder 20, in Verbindung mit einem der Ansprüche 21 oder 23, wobei die Eichmittel konfiguriert sind, um bei effektiver Abwesenheit eines Objekts einen neuen Schwellenkorrelationswert (VS) zu bestimmen.

## Claims

1. Method for detecting the possible presence of an object by a reader, both capable of mutually communicating by at least one contactless communication protocol, comprising a detection phase including a transmission by an antenna of the reader of a magnetic field on a carrier signal having a subcarrier modulated by a first sequence of data (SQ1), said modulation (101) being at least not interpretable by said object, a reception at the antenna of the reader of a signal resulting from this transmission, a demodulation (200) in the reader of the subcarrier of said resulting signal in such a way as to extract therefrom a second sequence of data (SQ2), a correlation (30) between the two sequences of data and a detection of the possible presence or the absence of said object based on the result of the correlation.

2. Method according to claim 1, wherein said modulation is not detectable by said object.

3. Method according to claim 2, wherein said modulation has a modulation index lower than a threshold index compatible with a non-detectability of said modulation by the object.

4. Method according to claim 3, wherein the modulation index is less than 1%.

5. Method according to claim 3 or 4, wherein the modulation index corresponds to a minimum index capable of being demodulated.

6. Method according to one of the previous claims, wherein, the result of a perfect correlation being equal to a reference correlation value (VCR), an absence of the object is detected if the result (RCR) of said correlation between the two sequences of data is less than or equal to said reference correlation value (VCR) and greater than or equal to a threshold correlation value (VS), and a possible presence of the object is detected if the result (RCR) of said correlation between the two sequences of data is less than the threshold correlation value (VS).

7. Method according to one of the previous claims, further comprising, before said detection phase, a calibration phase including, in the absence of any object, a determination of said threshold correlation value (VS).

8. Method according to claim 7, wherein the determination of the threshold correlation value comprises the transmission (S70), by the antenna of the reader of the magnetic field on the carrier signal having the subcarrier modulated by a sequence of calibration data (SQE), a reception at the antenna of the reader of a signal (SR) resulting from this transmission, a demodulation (S90) in the reader of the subcarrier of said resulting signal in such a way as to extract therefrom a third sequence of data (SQ3), a correlation (S100) between the sequence of calibration data and the third sequence of data, the result of this correlation providing said threshold correlation value (VS).

9. Method according to one of the previous claims, further comprising, in the case of a detection of a possible presence of the object at the end of the detection phase, a verification phase (S6-S8) including a verification of the effective presence of the object.

10. Method according to one of the previous claims, wherein the frequency of the subcarrier modulated in said detection phase is chosen from a group formed by one or more reference frequencies (Fdi) associated with one or more reference protocols for contactless communication capable of being used by the object for a transmission of information to the reader.

11. Method according to claims 9 and 10, wherein in the verification phase, the verification of the effective presence of the object comprises, for at least one of the reference protocols for contactless communication, a transmission by the reader of specific identification-request information (RQi) compliant with this reference protocol and waiting for the reception of specific information in return (ACKi) transmitted by the object in accordance with this reference protocol.

12. Method according to claim 7 or 8 taken in combination with one of claims 9 or 11, comprising a re-execution (S9) of the calibration phase in the effective absence of an object, in such a way as to determine a new threshold correlation value.

13. Reader, capable of communicating with an object by at least one contactless communication protocol via an antenna, **characterised in that** it further comprises processing means (MT) configured to detect a possible presence or an absence of the object, the processing means including transmission means (10) configured to transmit, via said antenna, a magnetic field on a carrier signal, modulation means (101) configured to modulate a subcarrier of the carrier signal by a first sequence of data, said modulation being at least not interpretable by said object, reception means (4) configured to receive at the antenna (5) a signal (SR) resulting from this transmission, demodulation means (200) configured to carry out a demodulation of said subcarrier of said resulting signal in such a way as to extract therefrom a second sequence of data, correlation means (30) configured to carry out a correlation between the two sequences of data and analysis means (31) configured to carry out the detection of the possible presence or the absence of said object based on the result of the correlation.

14. Reader according to claim 13, wherein the modulation means (101) are configured to modulate said subcarrier with a modulation not detectable by said object.

15. Reader according to claim 14, wherein the modulation means (101) are configured to modulate said subcarrier with a modulation index lower than a threshold index compatible with a non-detectability of said modulation by the object.

16. Reader according to claim 15, wherein the modulation means (101) are configured to modulate said subcarrier with a modulation index of less than 1%.

17. Reader according to one of claims 15 or 16, wherein the modulation means (101) are configured to modulate said subcarrier with a modulation index corresponding to the minimum modulation index capable of being demodulated by the demodulation means (200).

18. Reader according to one of claims 13 to 17, wherein, the result of a perfect correlation being equal to a reference correlation value, the analysis means (31) are configured to detect an absence of the object if the result of said correlation between the two sequences of data is less than or equal to said reference correlation value and greater than or equal to a threshold correlation value, and to detect a possible presence of the object if the result of said correlation between the two sequences of data is less than the threshold correlation value.

19. Reader according to claim 18, further comprising calibration means configured to determine, in the absence of any object, said threshold correlation value.

20. Reader according to claim 19, wherein the calibration means comprise the modulation means (101) configured to modulate the subcarrier by a sequence of calibration data (SQE), the reception means (4) configured to receive at the antenna (5) of the reader a signal resulting from the transmission via said antenna of said modulated subcarrier, the demodulation means (200) configured to demodulate the subcarrier of said resulting signal in such a way as to extract therefrom a third sequence of data, and the correlation means (30) configured to carry out a correlation between the sequence of calibration data and the third sequence of data, the result of this correlation providing said threshold correlation value.

21. Reader according to one of claims 13 to 20, further comprising verification means configured to, in the case of a detection of a possible presence of the object, verify the effective presence of the object.

22. Reader according to one of claims 13 to 21, comprising
a reception chain (20) connected to said antenna (5), configured to allow a reception of information from said object according to said at least one contactless communication protocol and including the demodulation means (200) capable of demodulating during said reception of information a subcarrier modulated with a reference frequency chosen from a group formed by one or more reference frequencies (Fdi) associated with one or more reference protocols for contactless communication capable of being used by the object for a transmission of information to the reader, and
wherein the processing means (MT) include the reception chain, the frequency of the subcarrier used by the processing means being chosen from said group.

23. Reader according to one of claims 21 and 22, wherein the verification means comprise an emission chain (10) and the reception chain (20) and are configured to, for at least one of the reference protocols for contactless communication, transmit specific identification-request information in accordance with this reference protocol and wait for the reception of specific information in return transmitted by the object in accordance with this reference protocol.

24. Reader according to claim 19 or 20 taken in combination with one of claims 21 or 23, wherein the calibration means are configured to, in the effective absence of an object, determine a new threshold correlation value (VS).
